Europäisches Patentamt

European Patent Office

Office européen des brevets

(19)

(11) **EP 0 716 374 A1**

(12) **EUROPÄISCHE PATENTANMELDUNG**

(43) Veröffentlichungstag:
    **12.06.1996 Patentblatt 1996/24**

(51) Int. Cl.[6]: **G06F 7/60**, G05B 13/02

(21) Anmeldenummer: **95118984.4**

(22) Anmeldetag: **01.12.1995**

(84) Benannte Vertragsstaaten:
    **AT BE CH DE DK ES FR GB IE IT LI NL PT SE**

(30) Priorität: **05.12.1994 DE 4443192**

(71) Anmelder: **SIEMENS AKTIENGESELLSCHAFT**
    **D-80333 München (DE)**

(72) Erfinder:
    • **Furumoto, Herbert, Dr.**
      **D-91052 Erlangen (DE)**
    • **Wolf, Thomas, Dr.**
      **D-91334 Hemhofen (DE)**

(54) **Verfahren zur Darstellung einer n'ten Variablen in einem dreidimensionalen Kennfeld und zugehörige Anordnung**

(57)    Zur Simulation von Fuzzy-Logik ist es häufig erforderich, die Abhängigkeit von einer Mehrzahl von Variablen auf einem Monitor zu visualisieren. Erfindungsgemäß wird eine dreidimensionale Darstellung eines Fuzzy-Systems benutzt, wobei die vierte und gegebenenfalls weitere Dimensionen durch rechnerische Hilfsmittel dargestellt werden. Bei der zugehörigen Anordnung ist das Fuzzy-System (10) für die Betriebssteuerung einer Industrieanlage zusätzlich als softwaremäßige Kopie (10*) im Speicher eines Rechners (20) vorhanden und steht dort für Simulationszwecke auf einem Monitor (30) zur Verfügung.

FIG 1

## Beschreibung

Die Erfindung bezieht sich auf ein Verfahren zur Darstellung einer n'ten Variablen in einem dreidimensionalen Kennfeld, vorzugsweise zur Simulation von Fuzzy-Logik. Daneben bezieht sich die Erfindung auch auf die zugehörige Anordnung zur Durchführung des Verfahren mit einem für die Betriebsführung einer Industrieanlage spezifizierten Fuzzy-System mit einzelnen Eingängen, wobei dem Fuzzy-System ein Rechner mit zugehörigem Monitor zugeordnet ist.

Beim Einsatz von Fuzzy-Logik ist sowohl das Herausfinden und das Überprüfen der Fuzzy-Regeln als auch der Zugehörigkeitsfunktionen von entscheidender Bedeutung. Beim Einsatz von Fuzzy-Logik in der Praxis, insbesondere bei einer Produktionsanlage, müssen häufig die Regeln und die Zugehörigkeitsfunktionen mit den in der mathematischen Analyse wenig geschulten Anlagenfahrern diskutiert werden. Besonders schwierig wird die Diskussion um Regeln und Zugehörigkeitsfunktionen dann, wenn mehr als drei Einflußgrößen auf eine Prozeßgröße wirken.

Bisher arbeiten die meisten in der Praxis verwendeten Fuzzy-Tools mit einer zweidimensionalen Darstellung der Simulationsergebnisse. Dreidimensionale Simulationen werden üblicherweise allenfalls im Entwicklungsstadium verwendet.

Aufgabe der Erfindung ist es demgegenüber, ein Verfahren anzugeben, das insbesondere für den praktischen Betrieb in Produktionsanlagen Vereinfachungen gibt. Daneben soll die zugehörige Anordnung geschaffen werden.

Die Aufgabe ist erfindungsgemäß dadurch gelöst, daß eine dreidimensionale Darstellung eines Fuzzy-Systems benutzt wird, wobei eine vierte und gegebenenfalls weitere Dimensionen durch rechnerische Hilfsmittel dargestellt werden. Bei der zugehörigen Anordnung ist das verwendete Fuzzy-System für die Betriebssteuerung der Anlage zusätzlich als softwaremäßige Kopie im Speicher des Rechners vorhanden und steht für Simulationszwecke zur Verfügung. Vorzugsweise besteht eine Rückkopplung vom Rechner mit kopiertem Fuzzy-System zum Fuzzy-System der Anlage.

Weitere Einzelheiten und Vorteile der Erfindung ergeben sich aus der Figurenbeschreibung von Ausführungsbeispielen in Verbindung mit den Patentansprüchen. Es zeigen in schematischer Darstellung

Figur 1    ein Fuzzy-System mit Rechner und zugehörigem Monitor,

Figur 2    die zeitliche Folge von dreidimensionalen Darstellungen auf einem Monitor gemäß Figur 1.

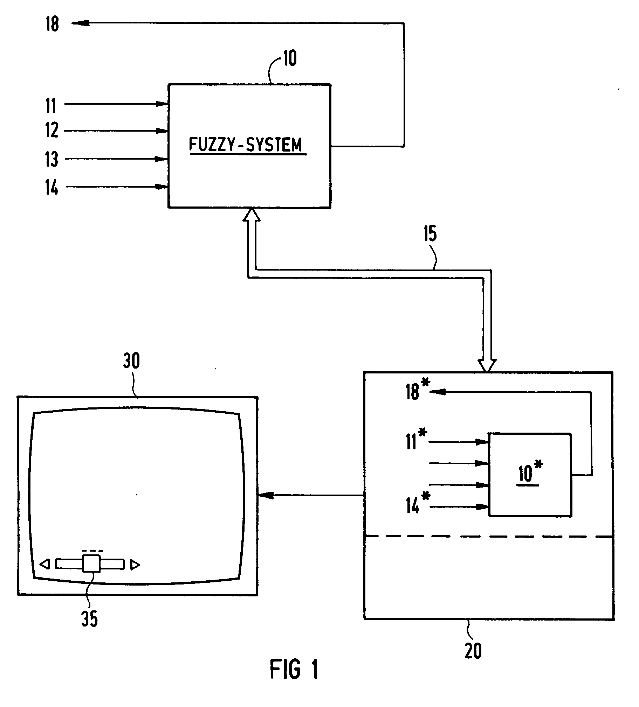

In Figur 1 ist mit 10 ein Fuzzy-System mit Eingängen 11 bis 14 und einem Ausgang 18 bezeichnet. Über die Eingänge 11 bis 14 werden Variable einer nicht im einzelnen dargestellten Produktionsanlage erfaßt, die über den Ausgang 18 in ihrem Betriebsverhalten gesteuert und/oder geregelt werden soll. Dabei wird in vorteilhafter Weise Fuzzy-Logik eingesetzt, die entsprechend der vorhandenen Problemstellung spezifiziert ist. Dem Fuzzy-System 10 ist über einem bidirektionalen Datenbus ein Personalcomputer 20 (PC) mit Monitor zugeordnet. Im Speicher des Personal-Computers 20 ist das spezifische Fuzzy-System 10 softwaremäßig abgespeichert. Es steht somit als Kopie 10* für Simulationszwecke zur Verfügung. Über die Datenkopplung ist das kopierte Fuzzy-System 10* in die in ihrem Betriebsverhalten zu beeinflussende Anlage rückübertragbar.

Beispielhaft soll mit dem dargestellten Fuzzy-System eine Papierfabrik gesteuert werden. Dabei sind wesentliche Kenngrößen die Holzfeuchte und der Ausschuß, wobei in Abhängigkeit von diesen Variablen die maximal mögliche Kochtemperatur von Interesse ist.

Bei der Anordnung gemäß Figur 1 kann auf dem Monitor 30 eine dreidimensionale Darstellung benutzt werden. Dabei werden über das Fuzzy-System 10* der vierte Eingang und gegebenenfalls weitere Eingänge aktiviert und wird somit für die Darstellung auf dem Monitor 30 wenigstens eine weitere Dimension realisiert. Diese nachfolgend auch als Dimensionen bezeichneten variablen können im Hintergrund des Monitors über eine Menü-Maske eingestellt werden. Der Blickpunkt des Beobachters kann weiterhin über entsprechende Tastensätze verstellt werden, wozu Pfeile "oben/unten" und "rechts/links" angegeben sind.

Die weitere Dimension als zusätzlicher Eingang in das Fuzzy-System 10 bzw. 10* wird dadurch simuliert, daß für diese Dimension im Hintergrund der dreidimensionalen Darstellung ein Simulationsprogramm gestartet wird, welches diese Größe zeitlich verändert. Das Simulationsprogramm für eine solche n'te Dimension kann beispielsweise eine zeitliche Rampe, eine Sägezahnkurve sein, wozu ein Kurvengenerator vorhanden ist.

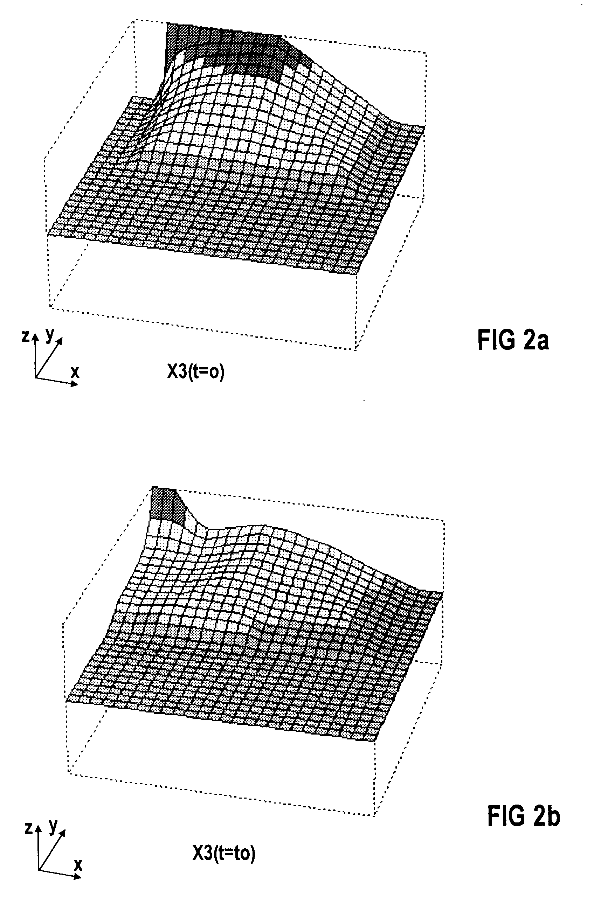

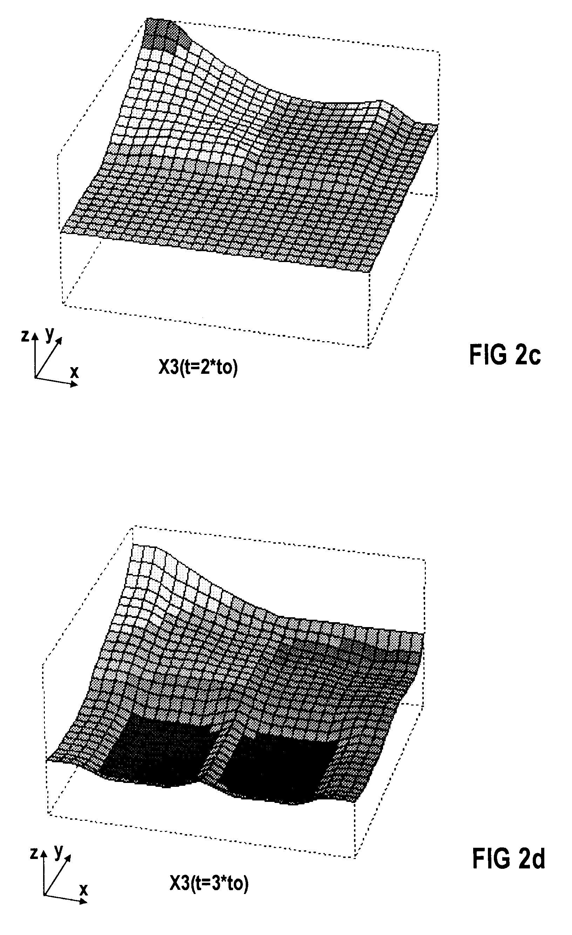

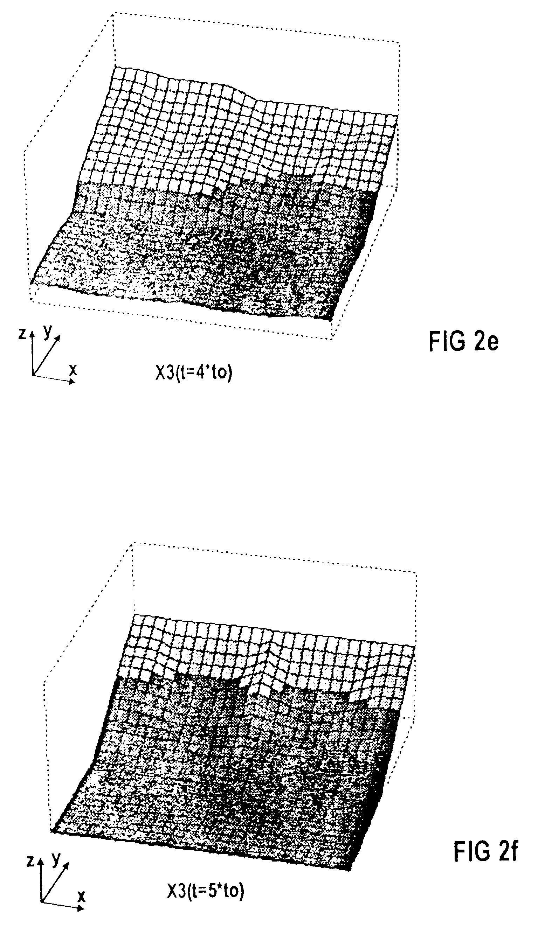

Allgemein sind die Eingänge für die Simulation ebenso wie die Parameter der Simulation vom Benutzer frei wählbar. In der Figur 2 ist beispielhaft eine Folge von dreidimensionalen Darstellungen für den Anwendungsfall einer Papierfabrik und zwar im einzelnen bei der Herstellung von Zellulose wiedergegeben.

Auf den Koordinaten x, y und z der dreidimensionalen Darstellung sind die Eingänge "Holzfeuchte" und "Ausschuß" gegenüber dem Ausgang "maximale Kochtemperatur" in der Bearbeitung durch das kopierte Fuzzy-System 10* wiedergegeben. Dabei sind die $SO_2$- und die MgO-Konzentrationen vorgegeben und ggfs. fest eingestellt. Mit einer Hintergrundsimulation wird der Holzverbrauch nach einer Rampe von 4,0 $m^3/T$ auf 5 $m^3/T$ verstellt, was in den Teilfiguren 2a bis 2f für t=0 bis $t=5t_0$ wiedergegeben ist. Verallgemeinert können die Ergebnisse der Simulation einer n'ten Variablen als weitere Dimension entsprechend einem vorgebbaren Zeitraster dargestellt sein.

Für den Betrachter am Monitor 30 verändert sich die dreidimensionale Darstellung im Zeitraffer in etwa stroboskopartig, wobei der zum Stroboskopbild gehörende, in seinem zeitlichen Verlauf simulierte Wert des n'ten Einganges als Zahlenwert oder als zweidimensionale Darstellung, beispielsweise als Leiste, in seiner zeitlichen Veränderung eingeblendet werden kann. Die zeitliche Simulation kann beliebig gestoppt und/oder neu gestartet werden.

Die am Beispiel erläuterte quasi-vierdimensionale Darstellung kann in weiteren Ausführungsformen um die Berücksichtigung einer weiteren, z.B. fünften Dimension erweitert werden. Dabei wird wie folgt vorgegangen: Nachdem für die vierte Dimension die Simulation durchgeführt wurde, werden besonders bevorzugte, dreidimensionale Darstellungen ausgewählt und auf dem Monitor 30 dargestellt. Vorteilhaft sind dabei vier bzw. sechs einzelne dreidimensionale Darstellungen, wie sie in der Figur 2 zu sehen sind. Diese Einzeldarstellungen werden bezüglich ihres signifikanten Wertes festgehalten, also gewissermaßen eingefroren. Im Hintergrund wird die Simulation der fünften Dimension durchgeführt. Damit verändern sich die vier bzw. sechs einzelnen jeweils dreidimensionalen Darstellungen stroboskopartig entsprechend dem Einfluß der fünften Dimension.

Zur Darstellung der fünften Dimension ist es zweckmäßig, die fünfte variable auf dem Monitor 30 gemäß Figur 1 in Form eines Schiebers 35 auf einer virtuellen Skala zu kennzeichnen. Der zur Zeit gültige Wert der fünften variablen kann in einem separaten Fenster auf dem Monitor 30, vorzugsweise über dem virtuellen Schieber 35 liegend, digital angegeben werden.

Besonders zweckmäßig ist es, die Prozeßgrößen entsprechend ihres Einflusses auf den Ausgang zu sortieren und mit schwächer werdendem Einfluß in einer höheren Dimension darzustellen. Die Weiterschaltung von einem Stroposkopbild bis zum nächsten Bild kann dabei wahlweise automatisch oder auf Anforderung durch Tasteneingabe erfolgen.

## Patentansprüche

1. Verfahren zur Darstellung einer n'ten Variablen in einem dreidimensionalen Kennfeld, vorzugsweise zur Simulation von Fuzzy-Logik, **dadurch gekennzeichnet,** daß eine dreidimensionale Darstellung eines Fuzzy-Systems benutzt wird, wobei eine vierte und gegebenenfalls weitere Dimensionen durch rechnerische Hilfsmittel dargestellt werden.

2. Verfahren nach Anspruch 1, **dadurch gekennzeichnet,** daß bei der Darstellung die Beobachtungsrichtung veränderbar ist.

3. Verfahren nach Anspruch 1, **dadurch gekennzeichnet,** daß jede weitere Dimension durch ein Simulationsprogramm, das die Dimension als Variable zeitlich verändert, erzeugt wird.

4. Verfahren nach Anspruch 3, **dadurch gekennzeichnet,** daß das Simulationsprogramm für die n'te Dimension eine Rampe und/oder eine Sägezahnkurve ist.

5. Verfahren nach Anspruch 3, **dadurch gekennzeichnet,** daß zur Berücksichtigung einer vierten Dimension eine Darstellung in Stroboskopform erfolgt.

6. Verfahren nach Anspruch 5, **dadurch gekennzeichnet,** daß in drei Teilbildern die dreidimensionale Darstellung des Zusammenhanges von drei ausgewählten Variablen erfolgt und in einem vorgegebenen Zeittakt zyklisch von einem Teilbild zum anderen Teilbild gegangen und dabei die vierte Variable verändert wird.

7. Verfahren nach Anspruch 5, **dadurch gekennzeichnet,** daß zur Berücksichtigung einer fünften Dimension die fünfte Variable in Form eines virtuellen Schiebers in ihrem Wert verändert wird.

8. Verfahren nach Anspruch 7, **dadurch gekennzeichnet,** daß der gültige Wert der fünften Variablen angezeigt wird.

9. Verfahren nach einem der Ansprüche 1 bis 8, **gekennzeichnet** in der Anwendung bei der Papierherstellung, wobei in der dreidimensionalen Darstellung des Fuzzy-Systems mit Eingängen und Ausgängen als Eingänge die Holzfeuchte und der Ausschuß gegenüber der maximalen Kochtemperatur als Ausgang aufgetragen sind.

10. Verfahren nach Anspruch 9, **dadurch gekennzeichnet,** daß zur Simulation als weitere Variable der Holzverbrauch entsprechend einer zeitlichen Rampe verstellt wird.

11. Anordnung zur Durchführung des Verfahrens nach Anspruch 1 oder einem der Ansprüche 2 bis 10, mit einem für die Betriebsführung einer Industrieanlage spezifizierten Fuzzy-System mit einzelnen Eingängen und einem Rechner mit Zugehörigem Monitor, **dadurch gekennzeichnet,** daß das Fuzzy-System (10) für die Betriebssteuerung der Anlage zusätzlich als softwaremäßige Kopie (10*) im Speicher des Rechners (20) vorhanden ist und für Simulationszwecke zur Verfügung steht.

12. Anordnung nach Anspruch 11, **dadurch gekennzeichnet,** daß das Fuzzy-System (10) der Industrieanlage über einen Datenbus (15) direkt mit dem Rechner (20) mit kopiertem Fuzzy-System (10*) verbunden ist und daß eine Rückkopplung vom Rechner (20) zum Fuzzy-System (10*) der Anlage besteht.

13. Anordnung nach Anspruch 12, **dadurch gekennzeichnet,** daß am Fuzzy-System (10*) im Rechner (20) die Eingänge (11* bis 14*) für die Simulation frei wählbar sind.

**14.** Anordnung nach Anspruch 13, **dadurch gekennzeichnet,** daß Mittel vorhanden sind, um die weiteren Dimensionen der Darstellung, insbesondere eine vierte und eine fünfte Variable, auf dem Monitor anzuzeigen.

**15.** Anordnung nach Anspruch 13 zur Durchführung des Verfahrens nach Anspruch 5 oder 6, **dadurch gekennzeichnet,** daß als Variable Parameter aus der Technologie der Papierherstellung frei wählbar sind.

18 ←

10

11 →
12 →
13 →
14 →

FUZZY-SYSTEM

15

30

18*

11* →
→
→
14* →

10*

35

20

FIG 1

FIG 2a

X3(t=o)

FIG 2b

X3(t=to)

z y
x
X3(t=2*to)

FIG 2c

z y
x
X3(t=3*to)

FIG 2d

FIG 2e

X3(t=4*to)

FIG 2f

X3(t=5*to)

EP 0 716 374 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | IEEE TRANSACTIONS ON FUZZY SYSTEMS, Bd. 2, Nr. 1, 1.Februar 1994 Seiten 74-81, XP 000433207 QIN S J ET AL 'A MULTIREGION FUZZY LOGIC CONTROLLER FOR NONLINEAR PROCESS CONTROL' * Absatz II - Absatz III; Abbildungen 3,7 * | 1 | G06F7/60 G05B13/02 |
| A | PROCEEDINGS OF THE CONFERENCE ON DECISION AND CONTROL, HONOLULU, DEC. 5 - 7, 1990, Bd. 3 OF 6, 5.Dezember 1990 INSTITUTE OF ELECTRICAL AND ELECTRONICS ENGINEERS, Seiten 1545-1546, XP 000147313 YUNG-YAW CHEN ET AL 'IMITATION OF STATE FEEDBACK CONTROLLERS BY FUZZY LINGUISTIC CONTROL RULES' * Seite 1546, linke Spalte, Zeile 35 - rechte Spalte, Zeile 9; Abbildung 1 * | 1 | |
| A | US-A-5 307 443 (M. TANAKA) * Anspruch 1; Abbildungen 9-27 * | 1 | **RECHERCHIERTE SACHGEBIETE (Int.Cl.6)** |
| A | FUZZY SETS AND SYSTEMS, Bd. 63, Nr. 3, Mai 1994 AMSTERDAM NL, Seiten 245-269, XP 000446520 H. HELLENDOORN, R. PALM 'FUZZY SYSTEM TECHNOLOGIES AT SIEMENS R&D' * Absatz 2.1 - Absatz 2.3; Abbildungen 8,20,21 * | 1 | G05B G06F |

Der vorliegende Recherchenbericht wurde für alle Patentansprüche erstellt

| Recherchenort | Abschlußdatum der Recherche | Prüfer |
|---|---|---|
| DEN HAAG | 25.März 1996 | Goetz, P |

**KATEGORIE DER GENANNTEN DOKUMENTE**

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
................................................................................
& : Mitglied der gleichen Patentfamilie, übereinstimmendes
   Dokument

EPO FORM 1503 03.82 (P04C03)